# EUROPEAN PATENT SPECIFICATION

(11) **EP 2 290 954 B1**
(45) Date of publication and mention of the grant of the patent: **01.03.2017**
(21) Application number: 10173889.6
(22) Date of filing: 24.08.2010
(51) Int. Cl.: G06F 3/0488, H04N 21/422, H04M 1/725, H04N 5/44, H04N 21/436, H04N 21/6547, H04N 21/658

(54) **Method for providing control widget and device using the same**
Verfahren zur Bereitstellung eines Steuerungswidgets und Vorrichtung damit
Procédé pour fournir la commande d'objets et dispositif l'utilisant

(30) Priority: 24.08.2009 KR 20090078354
(43) Date of publication of application: 02.03.2011
(73) Proprietor: Samsung Electronics Co., Ltd., Suwon-si, Gyeonggi-do, 443-742 (KR)
(72) Inventor: Sung, Ju-yun, Gyeonggi-do (KR); Choo, Hee-jeong, Gyeonggi-do (KR); Lee, Keum-koo, Gyeonggi-do (KR); Kwahk, Ji-young, Gyeonggi-do (KR)
(74) Representative: Gover, Richard Paul

(56) References cited:
- EP-A2- 2 192 474
- WO-A2-2008/030776
- WO-A2-2008/030875
- WO-A2-2009/063441
- US-A1- 2003 095 156
- US-A1- 2003 103 088
- US-A1- 2005 010 866
- US-A1- 2008 034 314
- US-A1- 2008 222 613
- US-A1- 2009 094 339

## Description

### PRIORITY

This application claims priority to Korean Patent Application No. 10-2009-0078354, filed in the Korean Intellectual Property Office on August 24, 2009, the contents of which are incorporated herein by reference.

### BACKGROUND OF THE INVENTION

### 1. Field of the Invention

The present invention relates generally to a method and device for providing a control widget, and more particularly, although not exclusively, to a method and device for receiving a widget from a server and providing a user with a service.

### 2. Description of the Related Art

With the proliferation of digital devices, users today have a variety of digital devices at their disposal.

Digital devices have enhanced convenience and communication in human lives. The digital technology has quickly developed, particularly in recent years, thereby achieving even higher performance and diversity.

Yet, consumers are seeking even more convenient and affluent lives, and are seeking higher performance and functionality in the digital devices.

US patent application, US2008/034314, describes a software application referred to as a "dashboard manager" which manages one or more instances of a user interface window referred to as "dashboards" each dashboard in turn includes one or more user interface elements or "widgets". The widgets simplify user control over aspects of behavior of the host of the dashboard. This modular structure allows functionality to be bundled and distributed to users over a distribution channel.

US patent application, US2003/095156, relates to a universal remote controller having iconic representations for built-in control functions corresponding to respective external devices. Updated and additional iconic representations and codes associated with those iconic representations can be downloaded when the controller is communicatively coupled to one of the external devices or a server.

Meanwhile, there is a limit to the number of functions that a single digital device can provide. Accordingly, a method is required, which enables convergence of functions of digital devices and thus further enhances user convenience.

### SUMMARY OF THE INVENTION

It is an aim of certain embodiments of the invention to solve, mitigate or obviate, at least partly, at least one of the problems and/or disadvantages associated with the prior art. Certain embodiments aim to provide at least one of the advantages described below.

Certain embodiments of the present invention overcome the aforementioned disadvantages occurring in the prior art.

According to an aspect of the present invention, a method of providing a control widget and a device using the same are provided, in which a control widget is installed onto a device, allowing an input of a control command to the device of interest from a remote distance.

The method for providing a control widget in a portable device may include receiving a control widget for use in inputting a control command to an external device, the control widget corresponding to the external device, executing the received control widget, and transmitting an inputted user command to the external device, the user command being received using the control widget corresponding to the external device.

The method may further include receiving an input of a command to edit the control widget, and editing the control widget according to the inputted command to edit.

The editing may include at least one of changing a shape of the control widget, deleting the control widget, changing an arrangement of control icons constructing the control widget, adding or deleting control icons constructing the control widget, and changing a position of the control widget.

The method may additionally include displaying a first control widget for use in inputting a control command with respect to a first controlled device, together with a second control widget for use in inputting a control command with respect to a second controlled device, and transferring, if a first user command is inputted through the first control widget, the first user command to the first controlled device, and transferring, if a second user command is inputted through the second control widget, the second user command to the second controlled device.

The control widget may be provided separately for each type of the controlled device.

The control widget may be pre-stored in a server or the controlled device.

The method may additionally include updating the control widget.

The control widget may connect to a server or the controlled device periodically to check information on the updates.

The control widget may receive information on the updates from the server or the controlled device.

According to another arrangement, a controlled device controlled by a control widget of a controlling device includes a network interface which transmits the control widget for use in inputting a control command with respect to the controlled device, and receives a user command inputted using the control widget executed by the controlling device, and a control unit which controls the controlled device according to the user command.

The control widget may be provided separately for each type of the controlled device.

The network interface may provide the controlling device with information on the updates of the control widget.

According to another aspect of the present invention, a portable device controlling an external device by a control widget includes a network interface which receives a control widget for use in inputting a control command to an external device, the control widget corresponding to the external device, a control unit which executes the received control widget, and a touch screen which displays the control widget and receives a user command, wherein the control unit controls the portable device to transmit an inputted user command to the controlled device, the user command being received using the control widget corresponding to the external device..

The control widget may be received from a server or the controlled device.

The controlling device may additionally include a touch screen to receive a command to edit with respect to the control widget, wherein the control unit controls the controlling device to edit the control widget according to the received command to edit.

The editing may include at least one of changing a shape of the control widget, deleting the control widget, changing an arrangement of control icons constructing the control widget, adding or deleting control icons constructing the control widget, and changing a position of the control widget.

The control widget may be provided separately for each type of the controlled device.

The control unit may control the controlling device to update the control widget.

The network interface may connect to a server or the controlled device periodically to check information on the updates.

The network interface may receive information on the updates from a server or the controlled device.

According to another arrangement, a system for controlling a controlled device by a control widget of a controlling device includes the controlled device which transmits the control widget for use in inputting a control command with respect to the controlled device, and performs a user command which is inputted using the control widget executed by the controlling device, and the controlling device which receives the control widget, executes the received control widget, and transfers a user command, which is inputted using the executed control widget, to the controlled device.

In certain embodiments, if the controlling device receives a command to edit with respect to the control widget, the controlling device edits the control widget according to the received command to edit.

The editing may include at least one of changing a shape of the control widget, deleting the control widget, changing an arrangement of control icons constructing the control widget, adding or deleting control icons constructing the control widget, and changing a position of the control widget.

The controlling device may update the control widget.

The control widget may connect to the controlled device periodically to check information on the updates, or receive information on the updates from the controlled device.

According to another arrangement, a control widget controlling system for controlling a controlled device by a control widget includes a server which transmits the control widget for use in inputting a control command with respect to the controlled device, a controlling device which receives the control widget, executes the received control widget, and transfers a user command, which is inputted using the executed control widget, to the controlled device, and the controlled device which performs the transferred user command.

The controlling device may edit the control widget, when receiving a command to edit with respect to the control widget, according to the received command to edit.

The editing may include at least one of changing a shape of the control widget, deleting the control widget, changing an arrangement of control icons constructing the control widget, adding or deleting control icons constructing the control widget, and changing a position of the control widget.

The controlling device may update the control widget.

The control widget may connect to a server periodically to check information on the updates, or receives information on the updates from the server.

According to certain embodiments, control widgets for controlling the controlled devices at a remote distance can be conveniently downloaded and installed onto the devices, as a result of which a user may control the plurality of controlled devices from a remote distance through one device.

Furthermore, since the control widget is editable, more user preferences are considered.

Another aspect of the invention provides a computer program comprising instructions arranged, when executed, to implement a method and/or apparatus in accordance with any one of the above-described aspects. A further aspect provides machine-readable storage storing such a program.

### BRIEF DESCRIPTION OF THE DRAWINGS

The above and other features and advantages of aspects and embodiments of the present invention will be more apparent by describing certain embodiments thereof with reference to the accompanying drawings, in which:
FIG. 1 illustrates a network according to the present invention;
FIG. 2 illustrates a method for downloading a control widget, editing the downloaded control widget according to a user's preference, and controlling home devices using the control widget, according to the present invention;
FIG. 3 illustrates control widgets according to the present invention;
FIGS. 4 and 5 illustrate editing of a control widget according to the present invention; and
FIG. 6 illustrates a diagram of a mobile phone of FIG. 1.

### DETAILED DESCRIPTION OF EMBODIMENTS OF THE INVENTION

Embodiments of the present invention will now be described in detail with reference to the accompanying drawings. It should be noted that throughout the drawings, the same drawing reference numerals will be construed to refer to the same elements, features and structures. In addition, descriptions of well-known functions and constructions are omitted for clarity and conciseness.

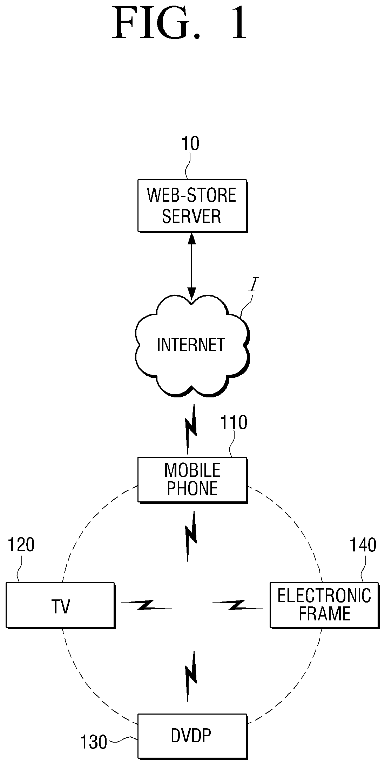

FIG. 1 illustrates a network according to the present invention.

Referring to FIG. 1, the network includes a mobile phone 110, a TeleVision (TV) 120, a Digital Video Disc Player (DVDP) 130, and an electronic frame 140 connected to one another for mutual communication.

The mobile phone 110 may be connected communicatively to a web-store server 10 via the Internet (I).

The mobile phone 110 may operate as a controlling device, in which case the other home devices such as the TV 120, the DVDP 130 and the electronic frame 140 may operate as the controlled devices. The web-store server 10 may operate as a server that mutually communicates with the controlling device.

The control widget is used to control and command the home devices 120, 130, 140 from a remote distance via the mobile phone 110. The control widget is customized and used for each of the home devices 120, 130, 140. In other words, a TV control widget to control and command the TV 120, a DVDP control widget to control and command the DVDP 130, and an electronic frame control widget to control and command the electronic frame 140, are provided separately from each other.

The web-store server 10 may include control widgets for respective products and models.

The home devices may also include control widgets designed for each according to their product and model categories.

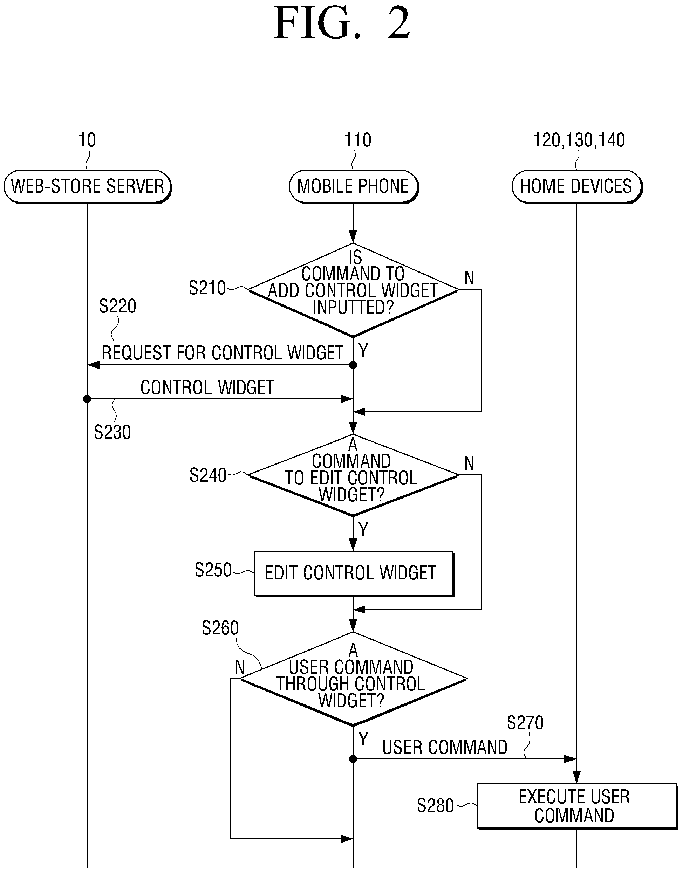

FIG. 2 illustrates a method of providing a control widget according to the present invention.

In the example explained below, the mobile phone 110 receives a control widget from the web-store server 10. However, this example is provided only for illustrative purposes, and other examples are applicable. For example, instead of the mobile phone 110, the other home devices such as the TV 120, the DVDP 130, or the electronic frame 140, may operate to transmit a corresponding control widget which is received from the web-store server 10 and stored therein, or a control widget which is stored therein previously, to the mobile phone 110.

At S210-Y, if a user inputs a command to add a control widget, at S220, the mobile phone 110 requests the web-store server 10 for a control widget of interest over the Internet (I). Alternatively, the mobile phone 10 may directly request the corresponding home device 120, 130, 140 for the control widget of interest.

By way of example, at S210, if a user gives an instruction to add a DVDP control widget, at S220, the mobile phone 110 may request the web-store server 10 or the home device 120, 130, 140 for the DVDP control widget. The request made at S220 may contain a DVDP model number, by which a requested home device is addressed.

At S230, the mobile phone 110 may receive a control widget from the web-store server 10. Alternatively, the mobile phone 10 may receive a control widget from the home device 120, 130, 140. The mobile phone 110 may then install the control widget received at S230.

A new control widget is thus installed on the mobile phone 110. The above processes may be implemented generally, if the user purchases a new home device or intends to manipulate his/her home device from a remote distance with the control widget executed on the mobile phone 110.

If the user intends to discontinue using or manipulating the home device from a remote distance using the control widget executable on the mobile phone 110, the user may give a command to delete the stored control widget of the home device from the mobile phone 110.

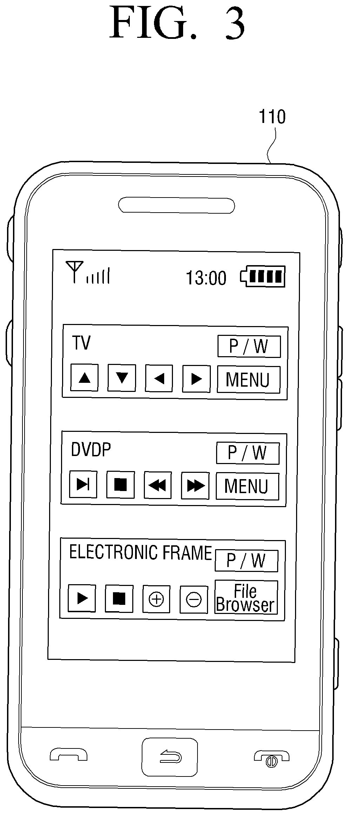

FIG. 3 illustrates the mobile phone 110, on a stand-by screen of which the control widgets thereof are arranged. Specifically, the mobile phone 110 includes a TV control widget, a DVDP control widget, and an electronic frame control widget executed and presented on the stand-by screen of the mobile phone 110.

The user may edit the control widgets appearing on the mobile phone 110 according to her/her preferences. Referring to FIG. 2, at S240-Y, if the user inputs a command to the mobile phone 110 to edit the control widget, at S250, the mobile phone 110 may edit the control widget according to the details of edition inputted at S240.

Editing the control widget may include changing the shape of a control widget, adding/deleting a control widget, changing an arrangement of control icons constructing the control widget, or adding/deleting the control icons constructing the control widget.

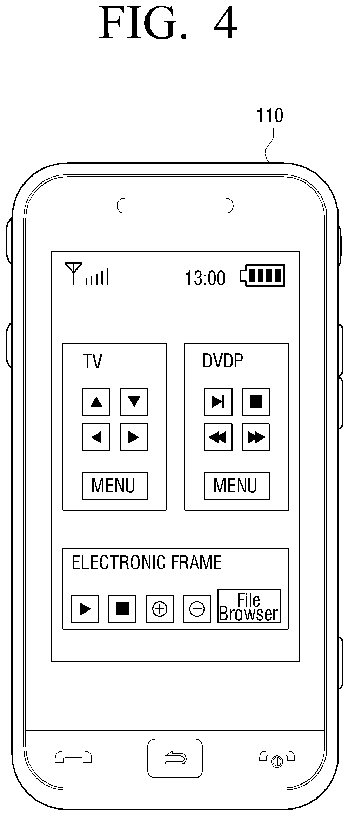

FIG. 4 illustrates the result after the shapes of the TV control widget and DVDP control widget of FIG. 3 are edited. Also, according to FIG. 4, the arrangement of the control icons constructing the TV control widget and the control icons constructing the DVDP control widget is changed.

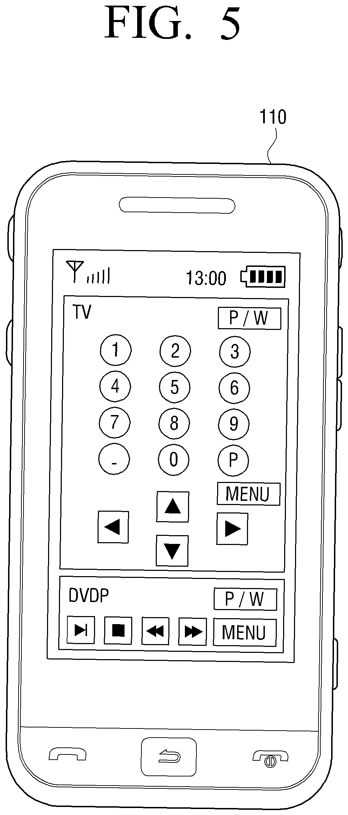

FIG. 5 illustrates the result after the shape of the TV control widget of FIG. 3 is edited and control icons constructing the TV control widget are added. Also, according to FIG. 5, the electronic frame control widget of FIG. 3 is deleted.

The particular manner of editing the control widget is explained above only for illustrative purposes. Therefore, different manners of editing may also be implemented. For example, regarding editing a position of a control widget, it is possible to change the position of the control widget on the stand-by screen of the mobile phone 110 according to the user's preferences. Additionally, it is also possible to edit the manner of adding a control widget that does not appear on the stand-by screen.

Referring back to FIG. 2, at S260-Y, if the user inputs a command using the control widget appearing on the mobile phone 110, at S270, the mobile phone 110 may transmit the inputted user command of S260 to a corresponding home device 120, 130 or 140.

Specifically, if the user inputs a user command using the TV control widget at S240, the mobile phone 110 transmits the inputted user command to the TV 120. If the user inputs a user command using the DVDP control widget at S240, the mobile phone 110 transmits the inputted user command to the DVDP 130. If the user inputs a user command using the electronic frame control widget at S240, the mobile phone 110 transmits the inputted user command to the electronic frame 140.

At S280, the home device 120, 130, or 140 in receipt of the user command of S270 may execute the transmitted user command.

Although not illustrated in FIG. 2, the control widgets installed on the mobile phone 110 may be updated. In other words, it is possible for an updated control widget to be received from the web-store server 10 and to replace the existent installed control widget.

Regarding the control widget updates, the control widget installed on the mobile phone 110 may possibly connect to the web-store server 10 or the home devices 120, 130, 140 periodically to check the information on the updates.

Additionally, the web-store server 10 or the home devices 120, 130, 140 may transmit the information on the updates to the mobile phone 110, in which case the mobile phone 110, in receipt of the information on the updates, may update the control widget installed thereon accordingly. In other words, if the control widget on the web-store server 10 is updated, the web-store server 10 may inform the mobile phone 110 of such update so that the mobile phone 110 updates the control widget accordingly.

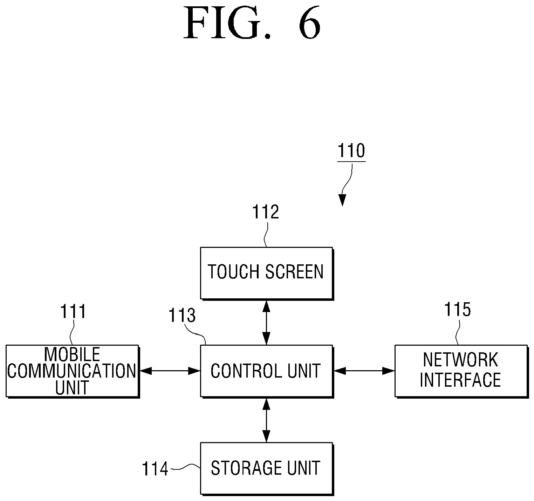

FIG. 6 illustrates a diagram of the mobile phone 110 of FIG. 1.

Referring to FIG. 6, the mobile phone 110 includes a mobile communication unit 111, a touch screen 112, a control unit 113, a storage unit 114, and a network interface 115.

The mobile communication unit 111 includes major and subsidiary functions of the mobile phone 110, such as mobile phone calling, Short Messaging Service (SMS), Digital Multimedia Broadcasting (DMB) broadcast reception, or photographing.

The touch screen 112 may provide a function as a display on which screens necessary for the mobile phone calling or SMS providing, DMB broadcast or the above-explained control widgets are displayed, and a function as an input through which the user inputs commands mainly by touching.

The storage unit 114 provides a space to store programs and data necessary for the driving of the mobile phone 110, and downloaded control widgets.

The network interface 115 is communicatively connected to the web-store server 10 via the Internet, and receives control widgets from the web-store server 10. The network interface 115 also receives the control widgets from the home devices 120, 130, 140. Additionally, the network interface 115 is communicatively connected to the nearby home devices 120, 130, 140 and transmits a user command inputted through the touch screen 112 to the connected home devices 120, 130, 140.

The control unit 113 controls the mobile communication unit 111, the touch screen 112, the control unit 113, the storage unit 114, and the network interface 115 to receive and edit the control-widget and transmit the user command using the control-widget, in order to perform the operations of the mobile phone 110 shown in FIG. 2.

Referring back to FIG. 1, the home devices 120, 130, 140 may include a control unit (not illustrated), a storage unit (not illustrated), and a network interface (not illustrated).

The storage unit may provide a storage space to store programs and data necessary for driving the home devices 120, 130, 140, or control widgets, either previously stored or newly received from the web-store server 10.

The network interface may transmit a control widget for use in inputting a control command with respect to the home device 120, 130, 140, and receive a user command that is inputted using the control widget executed by the mobile phone 110.

The network of FIG. 1 is provided only for illustrate purposes. Therefore, the same technical concept of the embodiment is applicable to other networks including different types of devices from those of FIG. 1. For example, a mobile device other than the mobile phone 110 may be implemented to control the home devices. Such other mobile devices may include, a Personal Digital Assistant (PDA), Portable Media Player (PMP), MP3 player, digital camera, portable game player, electronic book, or note Personal Computer (PC).

Furthermore, the mobile phone 110 controlling the other home devices 120, 130, 140 may be implemented as not only a mobile device, but also a standalone device with display function, such as a TV, electronic frame, or a desktop PC.

It will be appreciated that embodiments of the present invention can be realized in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention. Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

While the invention has been shown and described with reference to certain embodiments thereof, it will be understood by those skilled in the art that various changes in form and details may be made therein without departing from the scope of the invention as defined by the appended claims and their equivalents.

## Claims

1. A method for providing a plurality of control widgets in a portable device, comprising:
executing a respective control widget for each of a plurality of external devices (120, 130, 140), the respective control widget allowing input of user commands for controlling the corresponding external device from a remote distance;
displaying the plurality of control widgets, each comprising control icons corresponding to control commands of the corresponding external device on a stand-by screen;
receiving a user command inputted through one of the control widgets (S260-Y);
transmitting (S270) the inputted user command to an external device (120, 130, 140) corresponding to said one of the control widgets; and
arranging the displayed control widgets on the stand-by screen.

2. The method of claim 1, wherein the stand-by screen is a touch screen (112) in a standby mode.

3. The method of claim 1, further comprising:
receiving an input of a command to edit at least one of the control widgets (S240-Y); and
editing (S250) the or each control widget according to the inputted command to edit.

4. The method of claim 3, wherein the editing comprises at least one of: changing a shape of at least one of the control widgets, adding a further control widget, deleting at least one of the control widgets, changing an arrangement of the control icons constructing the control widget, adding or deleting control icons constructing the or each control widget, and changing a position of the or each control widget.

5. The method of claim 4, further comprising:
changing the arrangement of the control icons in the at least one control widget when the shape of said control widget is changed.

6. The method of claim 5, further comprising:
hiding at least one of the control widgets when the plurality of control widgets are displayed on a touch screen and the shape of said control widget is changed.

7. The method of any preceding claim, wherein the or each control widget is provided separately for each type of the external device (120, 130, 140).

8. The method of any preceding claim, wherein the or each control widget is previously stored in a server (10) or the external device (120, 130, 140).

9. The method of claim 1, wherein the or each control widget is received from a server or the external device (120, 130, 140).

10. The method of any preceding claim, further comprising updating the or each control widget.

11. The method of claim 10, wherein the or each control widget connects to a server (10) or the external device (120, 130, 140) periodically to check for information on the updates.

12. The method of claim 10 or claim 11, wherein the or each control widget receives information on the updates from the server (10) or the external device (120, 130, 140).

13. The method of claim 9, further comprising installing the received control widget (S230).

14. A portable device (110) for controlling a plurality of external devices (120, 130, 140) by respective control widgets, the portable device (110) comprising:
a control unit (113) which executes a respective control widget for each of the plurality of external devices (120, 130, 140), the respective control widget allowing input of user commands for controlling the corresponding external device from a remote distance, and
a stand-by screen which displays the plurality of control widgets, each comprising control icons corresponding to control commands of the corresponding external device and receives a user command inputted through one of the control widgets;
wherein the control unit (113) controls the portable device (110) to transmit the inputted user command to the external device (120, 130, 140) corresponding to said one of the control widgets, and wherein the displayed control widgets are arranged on the stand-by screen.

15. The portable device of claim 14, wherein the stand-by screen is a touch screen (112) in a standby mode.

16. The portable device of claim 14, wherein the or each control widget is received from a server (10) or the external device (120, 130, 140).

17. The portable device of claim 15, wherein the touch screen (112) is adapted to receive input of a command to edit at least one of the control widgets, and the control unit (113) is adapted to edit the or each control widget according to the inputted command to edit.

18. The portable device of claim 17, wherein the editing of the control widget comprises at least one of: changing a shape of at least one of the control widgets, adding a further control widget, deleting at least one of the control widgets, changing an arrangement of the control icons constructing the or each control widget, adding or deleting control icons constructing the or each control widget, and changing a position of the or each control widget.

19. The portable device of claim 18, wherein the control unit (113) deletes at least one of the control widget when a user command of deleting said at least one control widget is received.

20. The portable device of claim 18, wherein the control unit (113) changes the arrangement of the control icons when the shape of the or each control widget is changed.

21. The portable device of claim 18, wherein the control unit (113) hides at least one of the control widgets when the plurality of control widgets are displayed on the touch screen (112) and the shape of said control widget is changed.

22. The portable device of any one of claims 14 to 18, wherein the or each control widget is provided separately for each type of the external device (120, 130, 140).

23. The portable device of any one of claims 14 to 22, wherein the control unit (113) controls the portable device (110) to update the or each control widget.

24. The portable device of claim 23, wherein the network interface (115) connects to a server (10) or the external device (120, 130, 140) periodically to check for information on the updates.

25. The portable device of claim 23 or claim 24, wherein the network interface (115) receives information on the updates from a server (10) or the external device (120, 130, 140).

## Patentansprüche

1. Verfahren zur Bereitstellung einer Vielzahl von Steuer-Widgets in einer tragbaren Vorrichtung, wobei das Verfahren Folgendes umfasst:
Ausführen eines entsprechenden Steuer-Widgets für jede einer Vielzahl von externen Vorrichtungen (120, 130, 140), wobei das jeweilige Steuer-Widget die Eingabe von Benutzerbefehlen zum Steuern der entsprechenden externen Vorrichtung aus einem entfernten Abstand ermöglicht;
Anzeigen der Vielzahl von Steuer-Widgets, die jeweils Steuersymbole umfassen, die Steuerbefehlen der entsprechenden externen Vorrichtung auf einem Bereitschaftsbildschirm entsprechen;
Empfangen eines Benutzerbefehls, der durch eines der Steuer-Widgets (S260-Y) eingegeben wird;
Senden (S270) des eingegebenen Benutzerbefehls an eine externe Vorrichtung (120, 130, 140), die dem einen der Steuer-Widgets entspricht; und
Anordnen der angezeigten Steuer-Widgets auf dem Bereitschaftsbildschirm.

2. Verfahren nach Anspruch 1, wobei der Bereitschaftsbildschirm ein Berührungsbildschirm (112) in einem Bereitschaftsmodus ist.

3. Verfahren nach Anspruch 1, das ferner Folgendes umfasst:
Empfangen einer Eingabe eines Befehls zum Bearbeiten mindestens eines der Steuer-Widgets (S240-Y) und
Bearbeiten (S250) des oder jedes Steuer-Widgets entsprechend dem eingegebenen Befehl zum Bearbeiten.

4. Verfahren nach Anspruch 3, wobei das Bearbeiten mindestens eines von Folgendem umfasst: Ändern einer Form von mindestens einem der Steuer-Widgets, Hinzufügen eines weiteren Steuer-Widgets, Löschen mindestens eines der Steuer-Widgets, Ändern einer Anordnung der Steuersymbole, die das Steuer-Widget konstruieren, Hinzufügen oder Löschen von Steuersymbolen, die das oder jedes Steuer-Widget konstruieren, und Ändern einer Position des oder jedes Steuer-Widgets.

5. Verfahren nach Anspruch 4, das ferner Folgendes umfasst:
Ändern der Anordnung der Steuersymbole in dem mindestens einen Steuer-Widget, wenn die Form des Steuer-Widgets geändert wird.

6. Verfahren nach Anspruch 5, das ferner Folgendes umfasst:
Ausblenden mindestens eines der Steuer-Widgets, wenn die Vielzahl von Steuer-Widgets auf einem Berührungsbildschirm angezeigt und die Form des Steuer-Widgets geändert wird.

7. Verfahren nach einem der vorhergehenden Ansprüche, wobei das oder jedes Steuer-Widget für jeden Typ der externen Vorrichtung (120, 130, 140) separat bereitgestellt wird.

8. Verfahren nach einem der vorhergehenden Ansprüche, wobei das oder jedes Steuer-Widget zuvor in einem Server (10) oder in der externen Vorrichtung (120, 130, 140) gespeichert wird.

9. Verfahren nach Anspruch 1, wobei das oder jedes Steuer-Widget von einem Server oder der externen Vorrichtung (120, 130, 140) empfangen wird.

10. Verfahren nach einem der vorhergehenden Ansprüche, das ferner das Aktualisieren des oder jedes Steuer-Widgets umfasst.

11. Verfahren nach Anspruch 10, wobei das oder jedes Steuer-Widget periodisch mit einem Server (10) oder mit der externen Vorrichtung (120, 130, 140) verbunden wird, um nach Informationen über die Aktualisierungen zu suchen.

12. Verfahren nach Anspruch 10 oder 11, wobei das oder jedes Steuer-Widget Informationen über die Aktualisierungen von dem Server (10) oder der externen Vorrichtung (120, 130, 140) empfängt.

13. Verfahren nach Anspruch 9, das ferner das Installieren des empfangenen Steuer-Widgets (S230) umfasst.

14. Tragbare Vorrichtung (110) zum Steuern einer Vielzahl von externen Vorrichtungen (120, 130, 140) durch jeweilige Steuer-Widgets, wobei die tragbare Vorrichtung (110) Folgendes umfasst:
eine Steuereinheit (113), die für jede der Vielzahl von externen Vorrichtungen (120, 130, 140) ein entsprechendes Steuer-Widget ausführt, wobei das jeweilige Steuer-Widget die Eingabe von Benutzerbefehlen zum Steuern der entsprechenden externen Vorrichtung aus einem entfernten Abstand ermöglicht, und
einen Bereitschaftsbildschirm, der die Vielzahl von Steuer-Widgets anzeigt, die jeweils Steuersymbole umfassen, die den Steuerbefehlen der entsprechenden externen Vorrichtung entsprechen, und einen Benutzerbefehl empfängt, der über eines der Steuer-Widgets eingegeben wird;
wobei die Steuereinheit (113) die tragbare Vorrichtung (110) steuert, um den eingegebenen Benutzerbefehl zu der externen Vorrichtung (120, 130, 140) zu senden, die dem einen der Steuer-Widgets entspricht, und wobei die angezeigten Steuer-Widgets auf dem Bereitschaftsbildschirm angeordnet sind.

15. Tragbare Vorrichtung nach Anspruch 14, wobei der Bereitschaftsbildschirm ein Berührungsbildschirm (112) in einem Bereitschaftsmodus ist.

16. Tragbare Vorrichtung nach Anspruch 14, wobei das oder jedes Steuer-Widget von einem Server (10) oder der externen Vorrichtung (120, 130, 140) empfangen wird.

17. Tragbare Vorrichtung nach Anspruch 15, wobei der Berührungsbildschirm (112) dafür ausgelegt ist, eine Eingabe eines Befehls zu empfangen, um mindestens eines der Steuer-Widgets zu bearbeiten, und die Steuereinheit (113) dafür ausgelegt ist, das oder jedes Steuer-Widget gemäß dem eingegebenen Befehl zu bearbeiten.

18. Tragbare Vorrichtung nach Anspruch 17, wobei das Bearbeiten des Steuer-Widgets mindestens eines von Folgendem umfasst: Ändern einer Form von mindestens einem der Steuer-Widgets, Hinzufügen eines weiteren Steuer-Widgets, Löschen mindestens eines der Steuer-Widgets, Ändern einer Anordnung der Steuersymbole, die das oder jedes Steuer-Widget konstruieren, Hinzufügen oder Löschen von Steuersymbolen, die das oder jedes Steuer-Widget konstruieren, und Ändern einer Position des oder jedes Steuer-Widgets.

19. Tragbare Vorrichtung nach Anspruch 18, wobei die Steuereinheit (113) mindestens eines der Steuer-Widgets löscht, wenn ein Benutzerbefehl zum Löschen des mindestens einen Steuer-Widgets empfangen wird.

20. Tragbare Vorrichtung nach Anspruch 18, wobei die Steuereinheit (113) die Anordnung der Steuersymbole ändert, wenn die Form des oder jedes Steuer-Widgets geändert wird.

21. Tragbare Vorrichtung nach Anspruch 18, wobei die Steuereinheit (113) mindestens eines der Steuer-Widgets ausblendet, wenn die Vielzahl von Steuer-Widgets auf dem Berührungsbildschirm (112) angezeigt und die Form des Steuer-Widgets geändert wird.

22. Tragbare Vorrichtung nach einem der Ansprüche 14 bis 18, wobei das oder jedes Steuer-Widget für jeden Typ der externen Vorrichtung (120, 130, 140) separat bereitgestellt wird.

23. Tragbare Vorrichtung nach einem der Ansprüche 14 bis 22, wobei die Steuereinheit (113) die tragbare Vorrichtung (110) steuert, um das oder jedes Steuer-Widget zu aktualisieren.

24. Tragbare Vorrichtung nach Anspruch 23, wobei die Netzwerkschnittstelle (115) periodisch mit einem Server (10) oder mit der externen Vorrichtung (120, 130, 140) verbunden wird, um nach Informationen über die Aktualisierungen zu suchen.

25. Tragbare Vorrichtung nach Anspruch 23 oder Anspruch 24, wobei die Netzwerkschnittstelle (115) Informationen über die Aktualisierungen von einem Server (10) oder der externen Vorrichtung (120, 130, 140) empfängt.

## Revendications

1. Un procédé de fourniture d'une pluralité de gadgets logiciels de commande dans un dispositif portatif, comprenant :
l'exécution d'un gadget logiciel de commande respectif pour chaque dispositif d'une pluralité de dispositifs externes (120, 130, 140), le gadget logiciel de commande respectif permettant l'entrée de commandes d'utilisateur destinées à la commande du dispositif externe correspondant à distance,
l'affichage de la pluralité de gadgets logiciels de commande, chacun d'eux comprenant des icônes de commande correspondant à des commandes du dispositif externe correspondant sur un écran d'attente,
la réception d'une commande d'utilisateur entrée par l'intermédiaire d'un des gadgets logiciels de commande (S260-Y),
la transmission (S270) de la commande d'utilisateur entrée à un dispositif externe (120, 130, 140) correspondant audit un des gadgets logiciels de commande, et
l'agencement des gadgets logiciels de commande affichés sur l'écran d'attente.

2. Le procédé selon la Revendication 1, où l'écran d'attente est un écran tactile (112) dans un mode d'attente.

3. Le procédé selon la Revendication 1, comprenant en outre :
la réception d'une entrée d'une commande d'édition d'au moins un des gadgets logiciels de commande (S240-Y), et
l'édition (S250) du ou de chaque gadget logiciel de commande en fonction de la commande d'édition entrée.

4. Le procédé selon la Revendication 3, où l'édition comprend au moins une opération parmi : la modification d'une forme d'au moins un des gadgets logiciels de commande, l'ajout d'un autre gadget logiciel de commande, la suppression d'au moins un des gadgets logiciels de commande, la modification d'un agencement des icônes de commande composant le gadget logiciel de commande, l'ajout ou la suppression d'icônes de commande composant le ou chaque gadget logiciel de commande et la modification d'une position du ou de chaque gadget logiciel de commande.

5. Le procédé selon la Revendication 4, comprenant en outre :
la modification de l'agencement des icônes de commande dans le au moins un gadget logiciel de commande lorsque la forme dudit gadget logiciel de commande est modifiée.

6. Le procédé selon la Revendication 5, comprenant en outre :
le masquage d'au moins un des gadgets logiciels de commande lorsque la pluralité de gadgets logiciels de commande sont affichés sur un écran tactile et que la forme dudit gadget logiciel de commande est modifiée.

7. Le procédé selon l'une quelconque des Revendications précédentes, où le ou chaque gadget logiciel de commande est fourni séparément pour chaque type du dispositif externe (120, 130, 140).

8. Le procédé selon l'une quelconque des Revendications précédentes, où le ou chaque gadget logiciel de commande est antérieurement conservé en mémoire sur un serveur (10) ou sur le dispositif externe (120, 130, 140).

9. Le procédé selon la Revendication 1, où le ou chaque gadget logiciel de commande est reçu à partir d'un serveur ou du dispositif externe (120, 130, 140).

10. Le procédé selon l'une quelconque des Revendications précédentes, comprenant en outre l'actualisation du ou de chaque gadget logiciel de commande.

11. Le procédé selon la Revendication 10, où le ou chaque gadget logiciel de commande se raccorde à un serveur (10) ou au dispositif externe (120, 130, 140) périodiquement de façon à rechercher des informations relatives aux actualisations.

12. Le procédé selon la Revendication 10 ou 11, où le ou chaque gadget logiciel de commande reçoit des informations relatives aux actualisations à partir du serveur (10) ou du dispositif externe (120, 130, 140).

13. Le procédé selon la Revendication 9, comprenant en outre l'installation du gadget logiciel de commande reçu (S230).

14. Un dispositif portatif (110) destiné à la commande d'une pluralité de dispositifs externes (120, 130,140) par des gadgets logiciels de commande respectifs, le dispositif portatif (110) comprenant :
une unité de commande (113) qui exécute un gadget logiciel de commande respectif pour chaque dispositif de la pluralité de dispositifs externes (120, 130, 140), le gadget logiciel de commande respectif permettant l'entrée de commandes d'utilisateur destinées à la commande du dispositif externe correspondant à distance, et
un écran d'attente qui affiche la pluralité de gadgets logiciels de commande, chacun d'eux comprenant des icônes de commande correspondant à des commandes du dispositif externe correspondant et reçoit une commande d'utilisateur entrée par l'intermédiaire d'un des gadgets logiciels de commande,
où l'unité de commande (113) commande le dispositif portatif (110) de façon à transmettre la commande d'utilisateur entrée au dispositif externe (120, 130, 140) correspondant audit un des gadgets logiciels de commande, et où les gadgets logiciels de commande affichés sont agencés sur l'écran d'attente .

15. Le dispositif portatif selon la Revendication 14, où l'écran d'attente est un écran tactile (112) dans un mode d'attente.

16. Le dispositif portatif selon la Revendication 14, où le ou chaque gadget logiciel de commande est reçu à partir d'un serveur (10) ou du dispositif externe (120, 130, 140).

17. Le dispositif portatif selon la Revendication 15, où l'écran tactile (112) est adapté de façon à recevoir une entrée d'une commande d'édition d'au moins un des gadgets logiciels de commande, et l'unité de commande (113) est adaptée de façon à éditer le ou chaque gadget logiciel de commande en fonction de la commande d'édition entrée.

18. Le dispositif portatif selon la Revendication 17, où l'édition du gadget logiciel de commande comprend au moins une opération parmi : la modification d'une forme d'au moins un des gadgets logiciels de commande, l'ajout d'un autre gadget logiciel de commande, la suppression d'au moins un des gadgets logiciels de commande, la modification d'un agencement des icônes de commande composant le ou chaque gadget logiciel de commande, l'ajout ou la suppression d'icônes de commande composant le ou chaque gadget logiciel de commande et la modification d'une position du ou de chaque gadget logiciel de commande.

19. Le dispositif portatif selon la Revendication 18, où l'unité de commande (113) supprime au moins un des gadgets logiciels de commande lorsqu'une commande d'utilisateur de suppression dudit au moins un gadget logiciel de commande est reçue.

20. Le dispositif portatif selon la Revendication 18, où l'unité de commande (113) modifie l'agencement des icônes de commande lorsque la forme du ou de chaque gadget logiciel de commande est modifiée.

21. Le dispositif portatif selon la Revendication 18, où l'unité de commande (113) masque au moins un des gadgets logiciels de commande lorsque la pluralité de gadgets logiciels de commande sont affichés sur l'écran tactile (112) et que la forme dudit gadget logiciel de commande est modifiée.

22. Le dispositif portatif selon l'une quelconque des Revendications 14 à 18, où le ou chaque gadget logiciel de commande est fourni séparément pour chaque type du dispositif externe (120, 130, 140).

23. Le dispositif portatif selon l'une quelconque des Revendications 14 à 22, où l'unité de commande (113) commande le dispositif portatif (110) de façon à actualiser le ou chaque gadget logiciel de commande.

24. Le dispositif portatif selon la Revendication 23, où l'interface réseau (115) se raccorde à un serveur (10) ou au dispositif externe (120, 130, 140) périodiquement de façon à rechercher des informations relatives aux actualisations.

25. Le dispositif portatif selon la Revendication 23 ou 24, où l'interface réseau (115) reçoit des informations relatives aux actualisations à partir d'un serveur (10) ou du dispositif externe (120, 130, 140).
